# EUROPEAN PATENT APPLICATION

(11) **EP 2 871 563 A1**
(43) Date of publication of application: **13.05.2015**
(21) Application number: 14162969.1
(22) Date of filing: 31.03.2014
(51) Int. Cl.: G06F 3/0481, G06F 3/0488, G06K 9/22

(54) **Electronic device, method and storage medium**

(30) Priority: 07.11.2013 JP 2013231314
(71) Applicant: Kabushiki Kaisha Toshiba, Tokyo 105-8001 (JP)
(72) Inventor: Ohmori, Shigefumi, Tokyo, 105-8001 (JP); Nagata, Junichi, Tokyo, 105-8001 (JP)
(74) Representative: Henkel, Breuer & Partner

(57) **Abstract**

According to one embodiment, an electronic device (10) includes a display controller (202) configured to display a plurality of strokes corresponding to a single object. The plurality of strokes include at least one first stroke with a first color and at least one second stroke with a second color different from the first color, or include at least one first stroke with a first width and at least one second stroke with a second width different from the first width. The display controller (202) is configured to display, instead of the plurality of strokes, the single object using the first color or the second color determined by using a display area of the at least one first stroke and a displayed area of the at least one second stroke.

## Description

Embodiments described herein relate generally to an information processing technique suitable for, for example, an electronic device including a handwriting input function.

In recent years, a growing number of electronic devices are equipped with a touchscreen display to facilitate user's input operation. The input operation via the touchscreen display is used not only to give the electronic device an operation instruction but also to input a document by handwriting. Hence, an electronic device including a character recognition function (in addition to the handwriting input function) can obtain text data corresponding to a document input by handwriting.

Many of recent electronic devices allow users to appropriately set the color and width of a line indicating a handwriting in handwriting input. In such an electronic device, for example, a character of a plurality of strokes can be written by a plurality of lines having different colors and widths. When displaying text data obtained by recognizing this character, the color and width of the font are determined based on those of the line of the first stroke.

In this method, however, if the color or width is changed from, for example, the second stroke, a character that is apparently largely different from the character actually written by the user is displayed.

A general architecture that implements the various feature of the embodiments will now be described with reference to the drawings. The drawings and the associated descriptions are provided to illustrate the embodiments and not to limit the scope of the invention.
FIG. 1 is an exemplary perspective view showing the outer appearance of an electronic device according to an embodiment.
FIG. 2 is an exemplary view showing the cooperative operation between an external apparatus and the electronic device according to the embodiment.
Fig. 3 is an exemplary view showing an example of a handwritten document handwritten on the touchscreen display of the electronic device according to the embodiment.
FIG. 4 is an exemplary view for explaining sequential data corresponding to the handwritten document shown in FIG. 3, which is stored in a storage medium by the electronic device according to the embodiment.
FIG. 5 is an exemplary block diagram showing the system arrangement of the electronic device according to the embodiment.
FIG. 6 is an exemplary view for explaining the constituent element of the screen of the electronic device according to the embodiment.
FIG. 7 is an exemplary view showing a desktop screen displayed by a handwritten note application program that runs on the electronic device according to the embodiment.
FIG. 8 is an exemplary view showing a note preview screen displayed by the handwritten note application program that runs on the electronic device according to the embodiment.
FIG. 9 is an exemplary view showing a page editing screen displayed by the handwritten note application program that runs on the electronic device according to the embodiment.
FIG. 10 is an exemplary view showing a software button group displayed on the page editing screen as a menu by the handwritten note application program that runs on the electronic device according to the embodiment.
FIG. 11 is an exemplary view showing an example of a pen setting screen displayed by the handwritten note application program that runs on the electronic device according to the embodiment.
FIG. 12 is an exemplary view showing a software button group further displayed on the page editing screen as a submenu by the handwritten note application program that runs on the electronic device according to the embodiment.
FIG. 13 is an exemplary view showing a screen on which the handwritten page on the page editing screen shown in FIG. 9 is rendered and displayed by the handwritten note application program that runs on the electronic device according to the embodiment.
FIG. 14 is an exemplary view for explaining an example of rendering of the handwritten page on the page editing screen by the handwritten note application program that runs on the electronic device according to the embodiment.
FIG. 15 is an exemplary view showing an example of rendering of the handwritten on the page editing screen by the handwritten note application program that runs on the electronic device according to the embodiment.
FIG. 16 is an exemplary view showing a search dialogue displayed by electronic device according to the embodiment.
FIG. 17 is an exemplary block diagram showing the functional arrangement of the handwritten note application program that runs on the electronic device according to the embodiment.
FIG. 18 is an exemplary flowchart showing the procedure of color/width determination processing at the time of handwritten page rendering executed by the handwritten note application program that runs on the electronic device according to the embodiment.

Various embodiments will be described hereinafter with reference to the accompanying drawings.

In general, according to one embodiment, an electronic device includes a receiver and a display controller. The receiver is configured to receive stroke data corresponding to a plurality of strokes. The display controller is configured to display the plurality of strokes corresponding to a single object. The single object comprises a character, a graphics or a table. The plurality of strokes comprise at least one first stroke with a first color and at least one second stroke with a second color different from the first color, or comprise at least one first stroke with a first width and at least one second stroke with a second width different from the first width. The display controller is configured to display, instead of the plurality of strokes, the single object using the first color or the second color determined by using a display area of the at least one first stroke and a displayed area of the at least one second stroke, or the display controller is configured to display, instead of the plurality of strokes, the single object using the first width or the second width determined by using a display area of the at least one first stroke and a display area of the at least one second stroke.

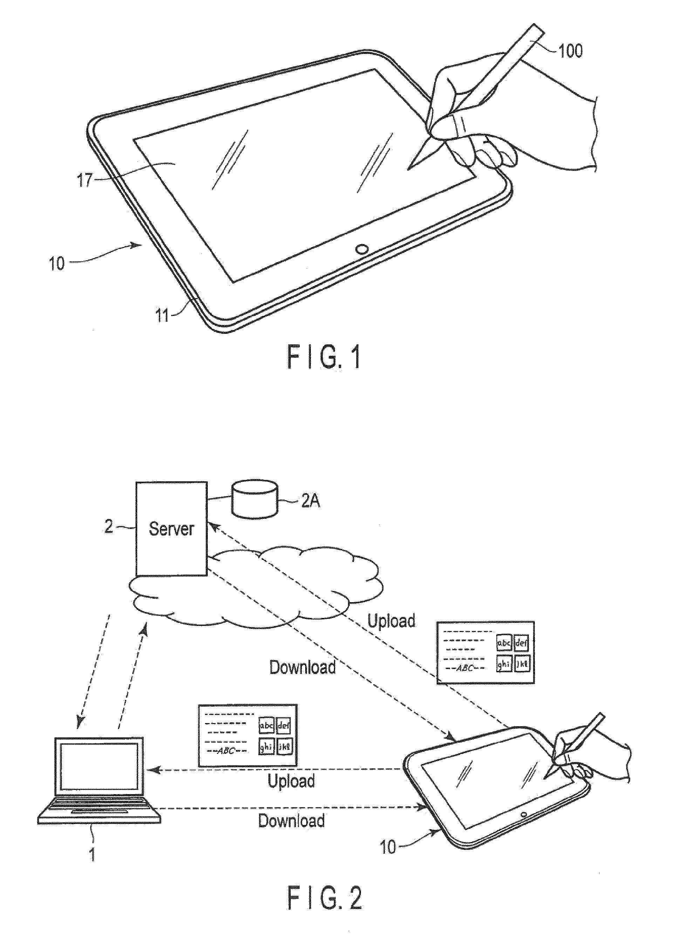

FIG. 1 is an exemplary perspective view showing the outer appearance of an electronic device according to an embodiment. This electronic device is, for example, a portable pen-based electronic device capable of handwriting input using a pen or finger. This electronic device can be implemented as a tablet computer, a notebook personal computer, a smartphone, a PDA, or the like. A case will be assumed below in which the electronic device is implemented as a tablet computer 10. The tablet computer 10 is a portable electronic device that includes a main body 11 and a touchscreen display 17, as shown in FIG. 1. The touchscreen display 17 is stacked and attached on the upper surfaced of the main body 11.

The main body 11 has a thin box shaped case. The touchscreen display 17 incorporates a flat panel display and a sensor configured to detect the contact position of a pen or finger on the screen of the flat panel display. The flat panel display can be, for example, a liquid crystal display (LCD). As the sensor, for example, a capacitive touchpanel, an electromagnetic induction type digitizer, or the like is usable. A case will be assumed below in which the touchscreen display 17 incorporates both of the two types of sensors, the digitizer and the touchpanel.

The touchscreen display 17 can detect not only a touch operation using a finger on the screen but also a touch operation using a pen 100 on the screen. The pen 100 can be, for example, a digitizer pen (electromagnetic induction pen). The user can perform a handwriting input operation on the touchscreen display 17 using the pen 100. During the handwriting input operation, the locus of the motion of the pen 100 on the screen, that is, a stroke handwritten by the handwriting input operation (the locus of a handwritten stroke) is rendered in real time, and a plurality of strokes input by handwriting are thus displayed on the screen. The locus of the motion of the pen 100 during the time in which the pen 100 is in contact with the screen corresponds to one stroke. A set of a number of strokes corresponding to handwritten characters, handwritten graphics, and handwritten tables, and the like constitutes a handwritten document.

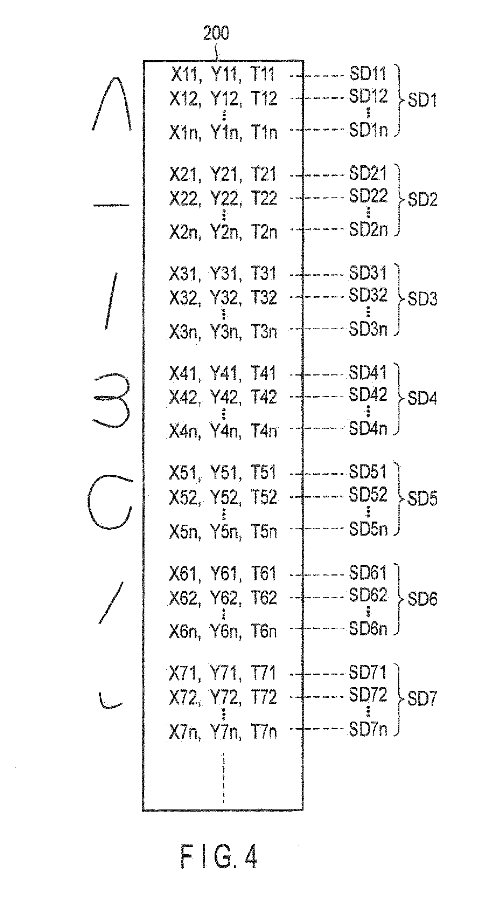

In this embodiment, the handwritten document its stored in a storage medium not as image data but as sequential data (handwritten document data) representing the coordinate-pair series of the locus of each stroke and the sequential relationship between the strokes. Details of the sequential data will be described latter with reference to FIG. 4. The sequential data represents the order of handwriting of the plurality of strokes, and includes a plurality of stroke data items corresponding to the plurality of strokes. In other words, the sequential data means a set of sequential stroke data items corresponding to the plurality of strokes. Each stroke data item corresponds to a given stroke, and includes a coordinate-pair data series (sequential coordinate pairs) corresponding to the points on the locus of the stroke. The arrangement order of the stroke data corresponds to the order of handwriting of the strokes.

The tablet computer 10 can read arbitrary existing sequential data from the storage medium and display a handwritten document corresponding to the sequential data, that is, a plurality of strokes represented by the sequential data on the screen. The plurality of strokes represented by the sequential data are the plurality of strokes input by handwriting.

The tablet computer 10 according to this embodiment also includes a touch input mode used to perform a handwriting input operation using not the pen 100 but a finger. When the touch input mode is enabled, the user can perform a handwriting input operation on the touchscreen display 17 using a finger. During the handwriting input operation, the locus of the motion of the finger on the screen, that is, a stroke handwritten by the handwriting input operation (the locus of a handwritten stroke) is rendered in real time, and a plurality of strokes input by handwriting are thus displayed on the screen.

In addition, the tablet computer 10 includes an editing function. With the editing function, an arbitrary handwritten portion (for example, handwritten character, handwritten mark, handwritten graphics, or handwritten table) of the displayed handwritten document selected by a range selection tool can be deleted or moved in accordance with an editing operation by the user using an "eraser" tool, a range selection tool, and various other tools. In addition, an arbitrary handwritten portion of the handwritten document selected by the range selection tool can be designated as a search key used to search the handwritten document. Furthermore, recognition processing such as handwritten character recognition, handwritten graphics recognition, or handwritten table recognition can be executed for an arbitrary handwritten portion of the displayed handwritten document selected by the range selection tool.

In this embodiment, the handwritten document can be managed as one or a plurality of pages. In this case, sequential data {handwritten document data) may be divided on the basis of an area that fits in one screen, and a group of sequential data items fitted in one screen may be recorded as one page. Alternatively, the page size may be changeable. In this case, since the page size can be larger than the size of one screen, a handwritten document whose area is larger than the screen size can be handled as one page If one page cannot wholly be displayed on the display at once, the page may be reduced. The display target portion of the page may be moved by scrolling in the vertical and horizontal directions.

FIG. 2 is an exemplary view showing the cooperative operation between an external apparatus and the tablet computer 10. The tablet computer 10 can cooperate with a personal computer 1 or a cloud. That is, the tablet computer 10 includes a wireless communication device such as a wireless LAN and can execute wireless communication with the personal computer 1. The tablet computer 10 can also execute communication with a server 2 on the Internet. The server 2 can be a server that executes an online storage service or various other cloud computing services.

The personal computer 1 includes a storage device such as a hard disk drive (HDD). The tablet computer 10 can transmit sequential data (handwritten document data) to the personal computer 1 via a network and record it in the HDD of the personal computer 1 (upload). To ensure secure communication between the tablet computer 10 and the personal computer 1, the personal computer 1 may authenticate the table computer 10 at the start of communication. In this case, a dialogue may be displayed on the screen of the tablet computer 10 to prompt the user to input an ID or password. Alternatively, the tablet computer 10 may automatically transmit its ID or the like to the personal computer 1.

Hence, even when the internal storage of the tablet computer 10 has a small capacity, the tablet computer 10 can handle a number of pieces of sequential data or a large quantity of sequential data.

The tablet computer 10 can also read at least one arbitrary piece of sequential data recorded on the HDD of the personal computer 1 (download) and display strokes represented by the read sequential data on the screen of the display 17 of the tablet computer 10. In this case, a list of thumbnails obtained by reducing the pages of a plurality of pieces of sequential data may be displayed on the screen of the display 17. Alternatively, one page selected from the thumbnails may be displayed in a normal size on the screen of the display 17.

The tablet computer 10 may communicate with not the personal computer 1 but the server 2 on the cloud for providing a storage service or the like, as described above. The tablet computer 10 can transmit sequential data (handwritten document data) to the server 2 via a network and record it in a storage device 2A of the server 2 (upload). The tablet computer 10 can also read arbitrary sequential data recorded on the storage device 2A of the server 2 (download) and display the loci of strokes represented by the sequential data on the screen of the display 17 of the tablet computer 10.

As described above, in this embodiment, the storage device that stores the sequential data can be any one of the storage device in the tablet computer 10, the storage device in the personal computer 1, and the storage device 2A of the server 2.

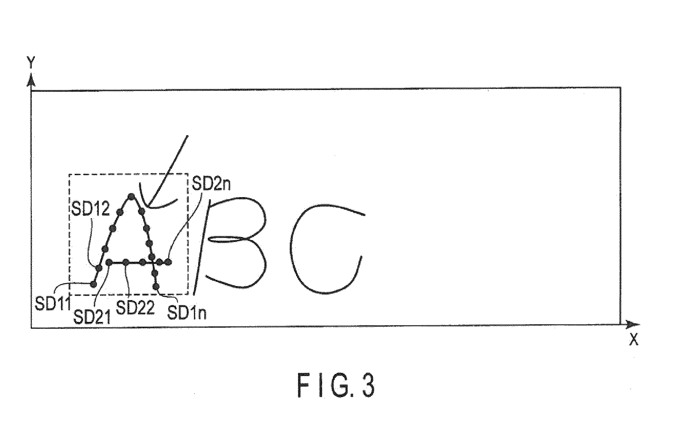

The relationship between the sequential data and strokes (for example, character, graphics, or table) handwritten by the user will be described next with reference to FIG. 3 and FIG. 4. FIG. 3 shows an example of a handwritten document (handwritten character string) handwritten on the touchscreen display 17 using the pen 100 or the like.

In the handwritten document, another character, graphics, or the like is often input by handwriting on a character, graphics, or the like previously input by handwriting. FIG. 3 assumes a case in which a handwritten character string "ABC" is input by handwriting in the order of "A", "B", and "C", and a handwritten arrow is input by handwriting in the immediate vicinity of the handwritten character "A".

The handwritten character "A" is expressed by two strokes, that is, two loci (a locus in a "∧" glyph and a locus in a "-" glyph) handwritten using the pen 100 or the like. The locus of the pen 100 in the "∧" glyph handwritten first is sampled in real time at, for example, equal time intervals, thereby obtaining sequential coordinate pairs SD11, SD12, ... , SD1n of the stroke in the "∧" glyph. Similarly, the locus of the pen 100 in the "-" glyph handwritten next is also sampled in real time at equal time intervals, thereby obtaining sequential coordinate pairs SD21, SD22, ... , SD2n of the stroke in the "-" glyph.

The handwritten character "B" is expressed by two strokes, that is, two loci handwritten using the pen 100 or the like. The handwritten character "C" is expressed by one stroke, that is, one locus handwritten using the pen 100 or the like. The handwritten "arrow" is expressed by two strokes, that is, two loci handwritten using the pen 100 or the like.

FIG. 4 shows sequential data 200 corresponding to the handwritten document shown in FIG. 3. The sequential data includes a plurality of stroke data items SD1, SD2, ... , SD7. In the sequential data 200, stroke data items SD1, SD2, ... , SD7 are sequentially arranged in the order that the strokes were made.

In the sequential data 200, the two leading stroke data items SD1 and SD2 represent the two strokes of the handwritten character "A", respectively. The third and fourth stroke data items SD3 and SD4 represent the two strokes of the handwritten character "B", respectively. The fifth stroke data item SD5 represents the one stroke of the handwritten character "C". The sixth and seventh stroke data items SD6 and SD7 represent the two strokes of the handwritten "arrow", respectively.

Each stroke data item includes a coordinate-pair data series (sequential coordinate pairs) corresponding to one stroke, that is, a plurality of coordinate pairs corresponding to a plurality of points on the locus of one stroke. In each stroke data item, the plurality of coordinate pairs are sequentially arranged in the order of writing of the stroke. For example, concerning the handwritten character "A", stroke data item SD1 includes a coordinate-pair data series (sequential coordinate pairs), that is, the n coordinate-pair data items SD11, SD12, ... , SD1n respectively corresponding to the points on the locus of the stroke in the "∧" glyph of the handwritten character "A". Stroke data item SD2 includes a coordinate-pair data series, that is, the n coordinate-pair data items SD21, SD22, ... , SD2n respectively corresponding to the points on the locus of the stroke in the "-" glyph of the handwritten character "A". Note that the number of coordinate-pair data items can change between the stroke data. Each coordinate-pair data item indicates X- and Y-coordinates corresponding to one point in a corresponding locus. For example, the coordinate-pair data item SD11 indicates the X-coordinate (X11) and Y-coordinate (Y11) of the start point of the stroke in the "∧" glyph. The coordinate-pair data item SD1n indicates the X-coordinate (X1n) and Y-coordinate (Y1n) of the end point of the stroke in the "∧" glyph.

Each coordinate-pair data item may include timestamp information T corresponding to the time at which the point corresponding to the coordinates was handwritten. The time of handwriting can be either an absolute time (for example, year/month/day/hour/minute/second) or a relative time based on a certain time. For example, the absolute time (for example, year/month/day/hour/minute/second) at which writing of a stroke started may be added to each stroke data item as timestamp information, and a relative time representing the difference from the absolute time may be added to coordinate-pair data item of the stroke data as the timestamp information T.

When sequential data including the timestamp information T added to each coordinate-pair data item is used, the temporal relationship between the strokes can be expressed more accurately.

In addition, information (Z) representing a handwriting pressure may be added to each coordinate-pair data item.

The sequential data 200 having the structure described with reference to FIG. 4 can represent not only the handwriting of each stroke but also the temporal relationship between the strokes. Hence, the use of the sequential data 200 makes it possible to handle the handwritten character "A" and the point of the handwritten "arrow" as different characters or graphics even when the point of the handwritten "arrow" is written on or near the handwritten character "A", as shown in FIG. 3.

In this embodiment, the handwritten document data is stored not as an image or a character recognition result but as the sequential data 200 formed from a set of sequential stroke data items, as described above. For this reason, handwritten characters can be handled without depending on the language of the handwritten characters. Hence, the structure of the sequential data 200 according to this embodiment can commonly be used in various countries using different languages all over the world

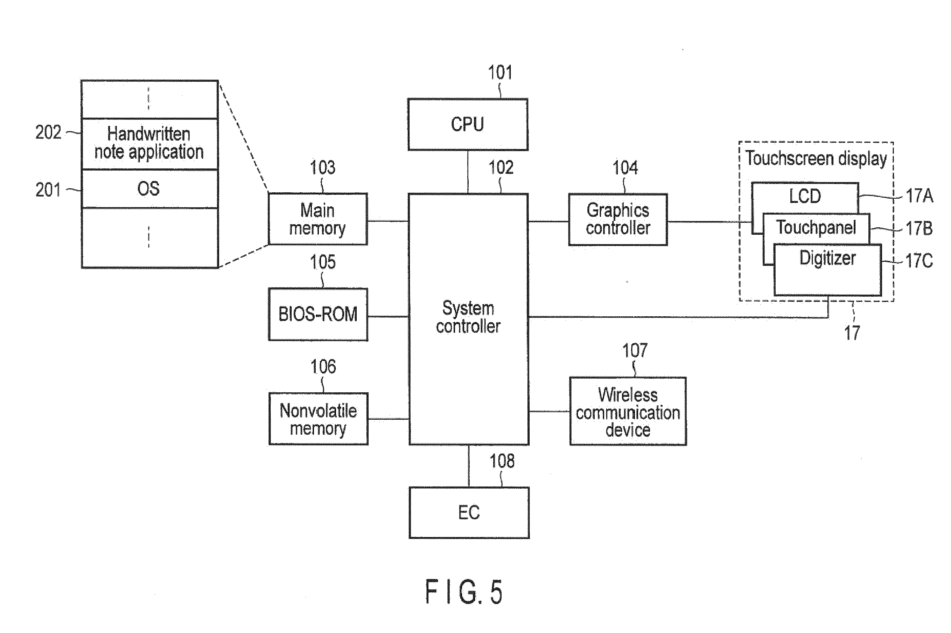

FIG. 5 is an exemplary block diagram showing the system arrangement of the tablet computer 10.

As shown in FIG. 5, the tablet computer 10 includes a CPU 101, a system controller 102, a main memory 103, a graphics controller 104, a BIOS-ROM 105, a nonvolatile memory 106, a wireless communication device 107, and an embedded controller (EC) 108.

The CPU 101 is a processor that controls the operations of various modules in the tablet computer 10. The CPU 101 executes various kinds of software loaded from the nonvolatile memory 106 serving as a storage device to the main memory 103. These pieces of software include an operating system (OS) 201, and various kinds of application programs. The application programs include a handwritten note application program 202. The handwritten note application program 202 includes a function of creating and displaying the above-described handwritten document data, a function of editing the handwritten document data, and a handwritten document search function of searching for handwritten document data including a desired handwritten portion or a desired handwritten portion in given handwritten document data.

The CPU 101 also executes a Basic Input/Output System (BIOS) stored in the BIOS-ROM 105. The BIOS is a program for hardware control.

The system controller 102 is a device that connects the local bus of the CPU 101 to various components. The system controller 102 incorporates a memory controller that controls access to the main memory 103. The system controller 102 includes a function of executing communication with the graphics controller 104 via a serial bus of PCI EXPRESS standard.

The graphics controller 104 is a display controller that controls an LCD 17A used as the display monitor of the tablet computer 10. A display signal generated by the graphics controller 104 is sent to the LCD 17A. The LCD 17A displays a screen image based on the display signal. A touchpanel 17B, the LCD 17A, and a digitizer 17C are stacked on each other. The touchpanel 17B is a capacitive pointing device used to perform input on the screen of the LCD 17A. The touchpanel 17B detects a contact position on the screen where a finger is in contact, a motion of the contact position, or the like. The digitizer 17C is an electromagnetic induction type pointing device used to perform input on the screen of the LCD 17A. The digitizer 17C detects a contact position on the screen where the pen (digitizer pen) 100 is in contact, a motion of the contact position, or the like.

The wireless communication device 107 is a device configured to execute wireless communication such as wireless LAN or 3G mobile communication. The EC 108 is a one-chip microcomputer including an embedded controller for power management. The EC 108 includes a function of powering on/off the tablet computer 10 in accordance with a user operation on the power button.

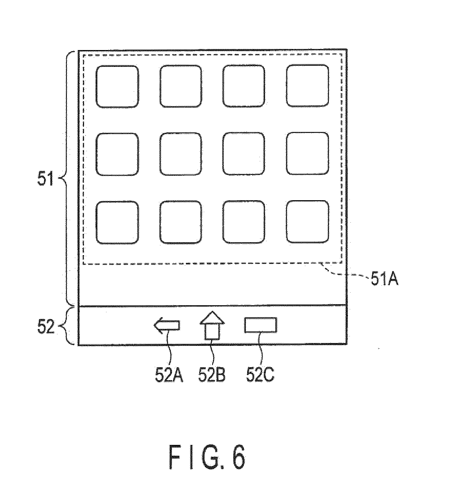

FIG. 6 illustrates the constituent elements of the screen displayed on the touchscreen display 17.

screen includes a display region (also referred to as a content region) 51 and a bar (also referred to as a navigation bar) 52 under the display region 51. The display region 51 is a region used to display contents. The contents of active application programs are displayed on the display region 51. FIG. 6 assumes a case in which a launcher program is active. In this case, the launcher program displays a plurality of icons 51A corresponding to a plurality of application programs on the display region 51.

Note that "a certain application program is active" means that this application program shifts to the foreground, in other words, this application program is activated and focused.

The bar 52 is a region used to display one or more software buttons (also referred to as software keys) of the OS 201. Each software button is assigned a predetermined function. When a software button is tapped by a finger or the pen 100, the OS 201 executes the function assignee to the software button. For example, in an Android (registered trademark) environment, a back button 52A, a home button 52B, and a recent application button 52C are displayed on the bar 52, as shown in FIG. 6. These software buttons are displayed at default display positions on the bar 52.

Examples of several representative screens presented to the user by the handwritten note application program 202 will be described next.

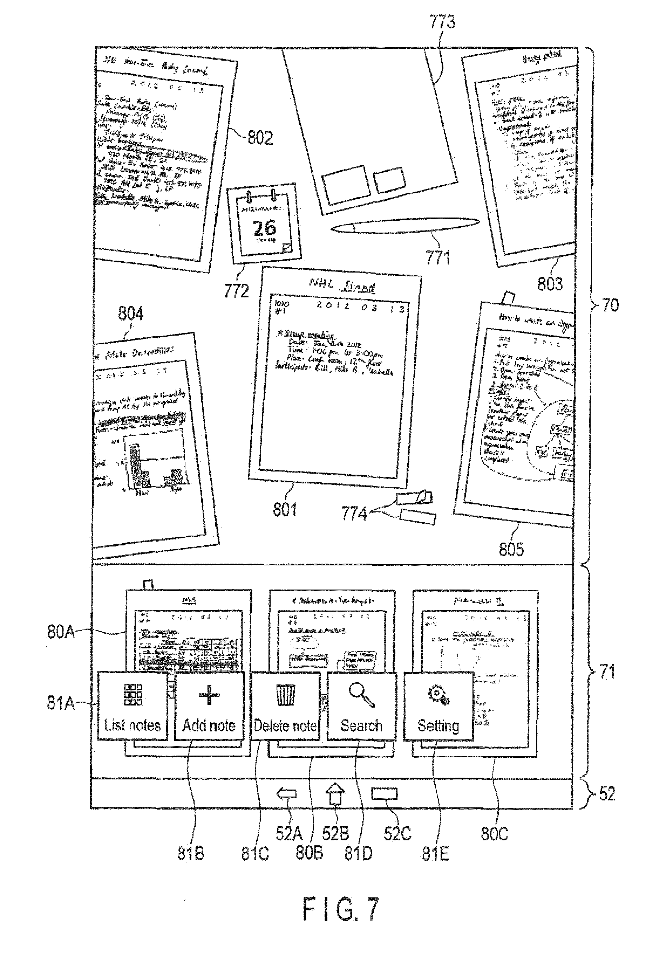

FIG. 7 shows a desktop screen displayed by the handwritten note application program 202. The desktop screen is the basic screen to handle a plurality of handwritten document data. The handwritten document data will be referred to as a handwritten note hereinafter.

The desktop screen includes a desktop screen region 70 and a drawer screen region 71. The desktop screen region 70 is a temporary region that displays a plurality of note icons 801 to 805 corresponding to a plurality of handwritten notes being worked on. Each of the note icons 801 to 805 displays the thumbnail of a page in the corresponding handwritten note. The desktop screen region 70 also displays a pen icon 771, a calendar icon 772, a scrap note (gallery) icon 773, and a tag (label) icon 774.

The pen icon 771 is a graphical user interface (GUI) element used to switch the display screen from the desktop screen to a page editing screen. The calendar icon 772 is an icon indicating the current date. The scrap note icon 773 is a GUI element used to browse data (to be referred to as scrap data or gallery data) loaded from another application program or an external file. The tag icon 774 is a GUI element used to paste a label (tag) to an arbitrary page in an arbitrary handwritten note.

The drawer screen region 71 is a display region used to browse a storage region for storing all created handwritten notes. The drawer screen region 71 displays note icons 80A, 80B, and 80C corresponding to some of all the handwritten notes. Each of the note icons 80A, 80B, and 80C displays the thumbnail of a page in the corresponding handwritten note. The handwritten note application program 202 can detect a gesture (for example, a swipe) made on the drawer screen region 71 by the user using the pen 100 or a finger. In response to detection of the gesture (for example, a swipe), the handwritten note application program 202 scrolls the screen image on the drawer screen region 71 to the left or right. Note icons corresponding to arbitrary handwritten notes can thus be displayed on the drawer screen region 71.

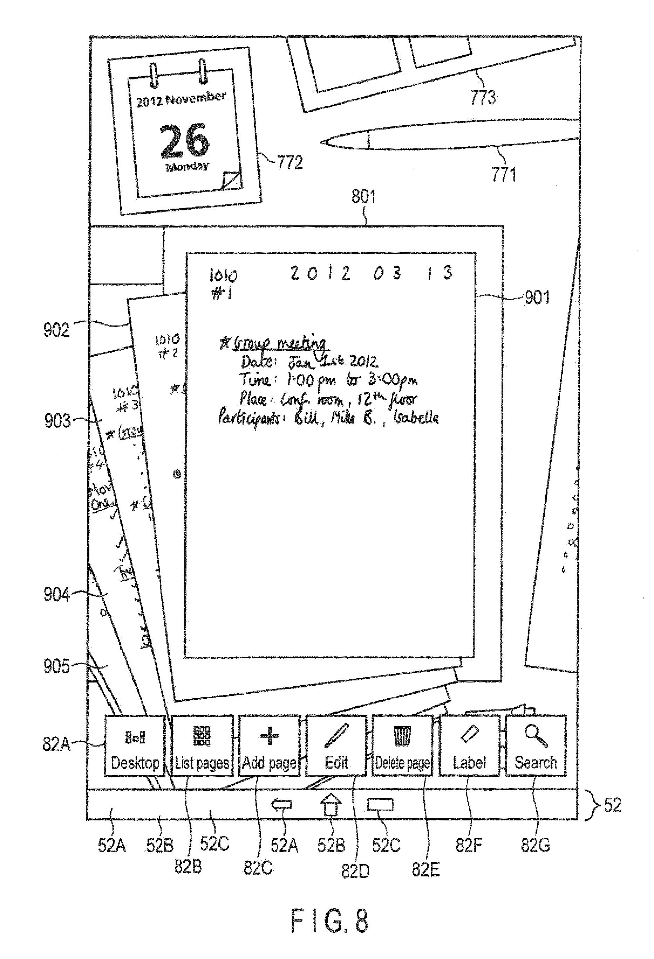

The handwritten note application program 202 can also detect a gesture (for example, a tap) made on a note icon in the drawer screen region 71 by the user using the pen 100 or a finger. In response to detection of the gesture (for example, a tap) on a note icon in the drawer screen region 71, the handwritten note application program 202 moves the note icon to the center of the desktop screen region 70. The handwritten note application program 202 selects a handwritten note corresponding to the note icon and displays a note preview screen shown in FIG. 8 in place of the desktop screen. The note preview screen in FIG. 8 is a screen capable of browsing an arbitrary page in the selected handwritten note.

The handwritten note application program 202 can also detect a gesture (for example, a tap) made on the desktop screen region 70 by the user using the pen 100 or a finger. In response to detection of the gesture (for example, a tap) on the note icon located at the center of the desktop screen region 70, the handwritten note application program 202 selects a handwritten note corresponding to the note icon located at the center and displays the note preview screen shown in FIG. 8 in place of the desktop screen.

The desktop screen can also display a menu. The menu includes a list note button 81A, a note addition button 81B, a note delete button 81C, a search button 81D, and a setting button 81E. The list note button 81A is a button used to display a list of handwritten notes. The note addition button 81B is a button used to create (add) a handwritten note. The note delete button 81C is a button used to delete a handwritten note. The search button 81D is a button used to open a search screen (search dialogue). The setting button 81E is a button used to open a setting screen.

The back button 52A, the home button 52B, and the recent application button 52c are displayed on the bar 52.

FIG. 8 shows the above-described note preview screen.

The note preview screen is a screen capable of browsing an arbitrary page in a selected handwritten note. Assume that a handwritten note corresponding to the note icon 801 is selected. In this case, the handwritten note application program 202 displays a plurality of pages 901, 902, 903, 904, and 905 included in the handwritten note such that the pages 901, 902, 903, 904, and 905 overlap and are partially visible.

The note preview screen also displays the pen icon 771, the calendar icon 772, the scrap note icon 773, and the tag icon 714 described above.

The note preview screen can also display a menu. The menu includes a desktop button 82A, a list page button 82B, a page addition button 82C, an edit button 82D, a page delete button 82E, a label button 82F, and a search button 82G. The desktop button 82A is a button used to display the desktop screen. The list page button 82B is a button used to displays a list of pages in the currently selected handwritten note. The page addition button 82C is a button used to create (add) a new page. The edit button 82D is a button used to display a page editing screen. The page delete button 82E is a button used to delete a page. The label button 82F is a button used to display a list of usable label types. The search button 82G is a button used to display a search screen.

The back button 52A, the home button 52B, and the recent application button 52C are displayed on the bar 52.

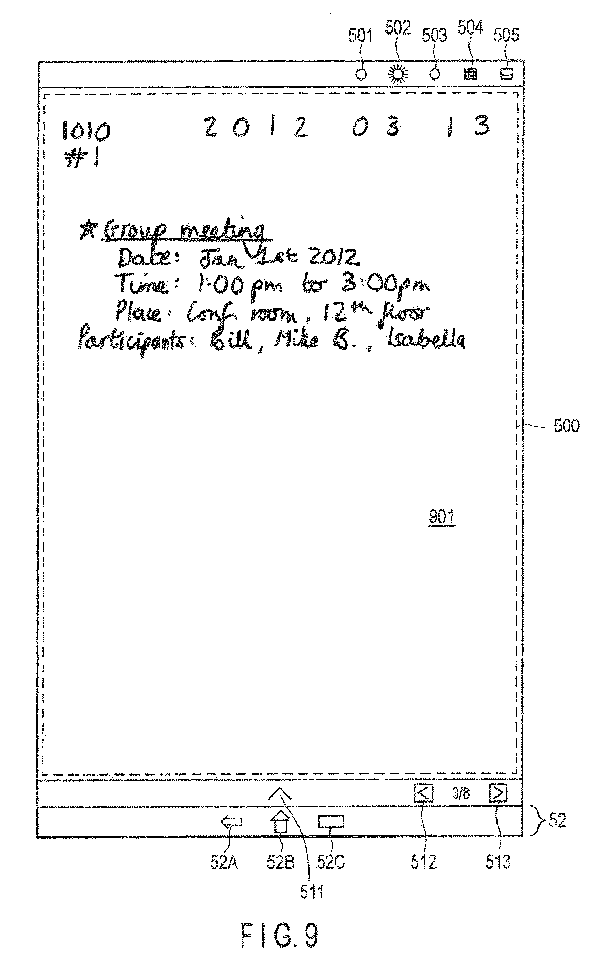

The handwritten note application program 202 can detect various gestures made by the user on the note preview screen. For example, in response to detection of a gesture, the handwritten note application program 202 changes the page to be displayed on the top to an arbitrary page (page advance, page back). Additionally, in response to detection of a gesture (for example, a tap) made on the uppermost page, detection of a gesture (for example, a tap) made on the pen icon 771, or detection of a gesture (for example, a tap) made on the edit button 82D, the handwritten note application program 202 selects the uppermost page and displays a page editing screen shown in FIG. 9 in place of the note preview screen.

The page editing screen in FIG. 9 is a screen capable of creating a new page (handwritten page) or browsing and editing an existing page. When the page 901 on the note preview screen shown in FIG. 8 is selected, the page editing screen displays the contents of the page 901, as shown in FIG. 9.

In the page editing screen, a rectangular region 500 surrounded by the broken line is a handwriting input area capable of handwriting input. In the handwriting input area 500, an input event from the digitizer 17C is used not as an event indicating a gesture such as a tap but to display (render) a handwritten stroke. On the other hand, in a region other than the handwriting input area 500 on the page editing screen, an input event from the digitizer 17C can also be used as an event indicating a gesture such as a tap.

An input event from the touchpanel 17B is used not to display (render) a handwritten stroke but as an event indicating a gesture such as a tap or swipe.

The page editing screen also displays a quick select menu including three types of pens 501 to 503 registered by the user in advance, a range selection tool 504, and an eraser 505. Assume that the black pen 501, the red pen 502, and the marker 503 are registered by the user in advance. The user can change the pen type to be used by tapping a pen (button) in the quick select menu using the pen 100 or a finger. For example, when the handwriting input operation using the pen 100 is performed on the page editing screen in a state in which the black pen 501 is selected by a user's tap gesture using the pen 100 or a finger, the handwritten note application program 202 displays a black stroke (locus) on the page editing screen in accordance with the motion of the pen 100.

The above-described three types of pens in the quick select menu can also be switched by operating the side button of the pen 100. A combination of often utilized pen colors, pen thicknesses (widths), and the like can be set in the above-described three types of pens in the quick select menu.

The page editing screen also displays a menu button 511, a page back button 512, and a page advance button 513. The menu button 511 is a button used to display a menu.

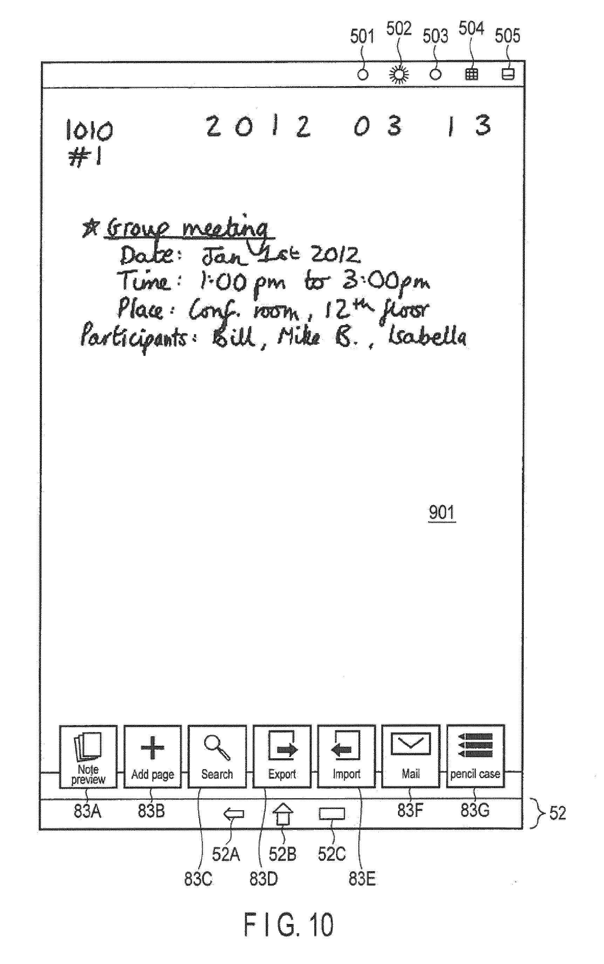

FIG. 10 is an exemplary view showing a software button group displayed on the page editing screen as a menu by operating the menu button 511.

When the menu button 511 is operated, a note preview button 83A, a page addition button 83B, a search button 83C, an export button 83D, an import button 83E, a mail button 83F, and a pencil case button 83G are displayed on the page editing screen as a menu, as shown in FIG. 10.

The note preview button 83A is a button used to return to the note preview screen. The page addition button 83B is a button used to add a new page. The search button 83C is a button used to open a search screen. The export button 83D is a button used to display a submenu for export. The import button 83E is a button used to display a submenu for import. The mail button 83F is a button used to activate processing of converting a handwritten page displayed on the page editing screen into a text and transmitting it by email. The pencil case button 83G is a button used to invoke a pen setting screen capable of changing the colors (the colors of lines to be drawn), thicknesses [widths] (the thicknesses [widths] of lines to be drawn), and the like of the three types of pens in the quick select menu.

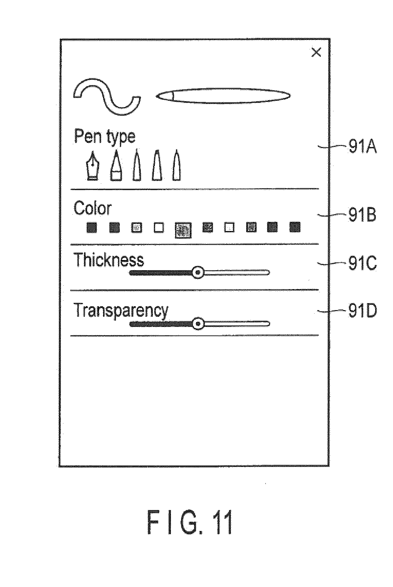

FIG. 11 is an exemplary view showing an example of a pen setting screen displayed by the handwritten note application program 202.

The pen setting screen includes a field 91A used to set a pen type, a field 91B used to set a line color, a field 91C used to set a line thickness (width), and a field 91D used to set a line transparency. The pen setting screen allows the user to set a combination of the colors (the colors of lines to be drawn), thicknesses [widths] (the thicknesses [widths] of lines to be drawn), and the like of the three types of pens in and the quick select menu.

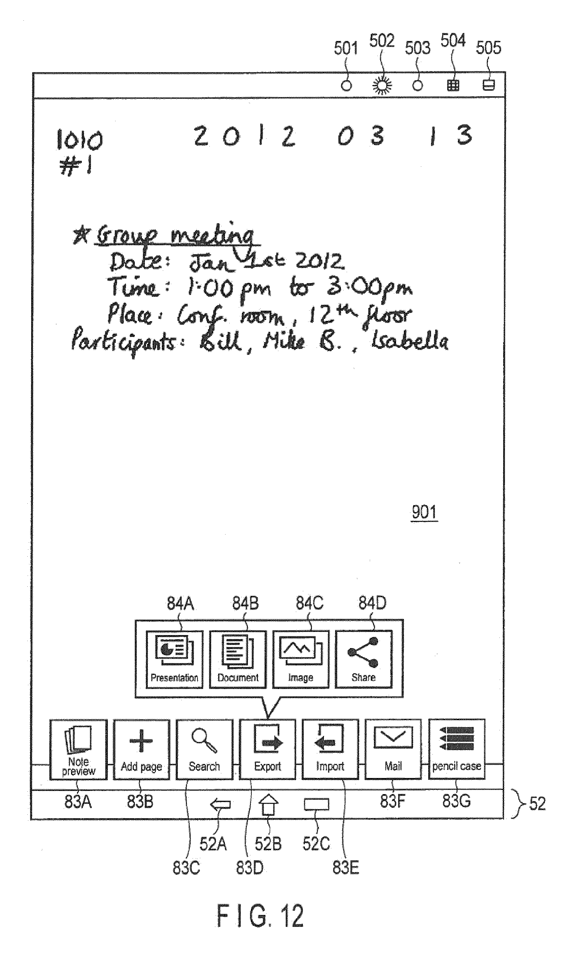

FIG. 12 is an exemplary view showing a software button group further displayed on the page editing screen as a submenu by operating the export button 83D.

When the export button 83D is operated, a presentation button 84A, a document button 84B, an image button 84C, and a share button 84D are further displayed on the page editing screen (on which the software button group including the export button 83D is displayed as a menu) as a submenu, as shown in FIG. 12.

The presentation button 84A is a button used to activate processing of recognizing the handwritten page displayed on the page editing screen converting it into a presentation file. The document button 84B is a button used to activate processing of recognizing the handwritten page displayed on the page editing screen and converting it into an electronic document file. The image button 84C is a button used to activate processing of converting the handwritten page displayed on the page editing screen into an image file. The share button 84D is a button used to activate processing of converting the handwritten page displayed on the page editing screen into an image file and causing other application programs to share it.

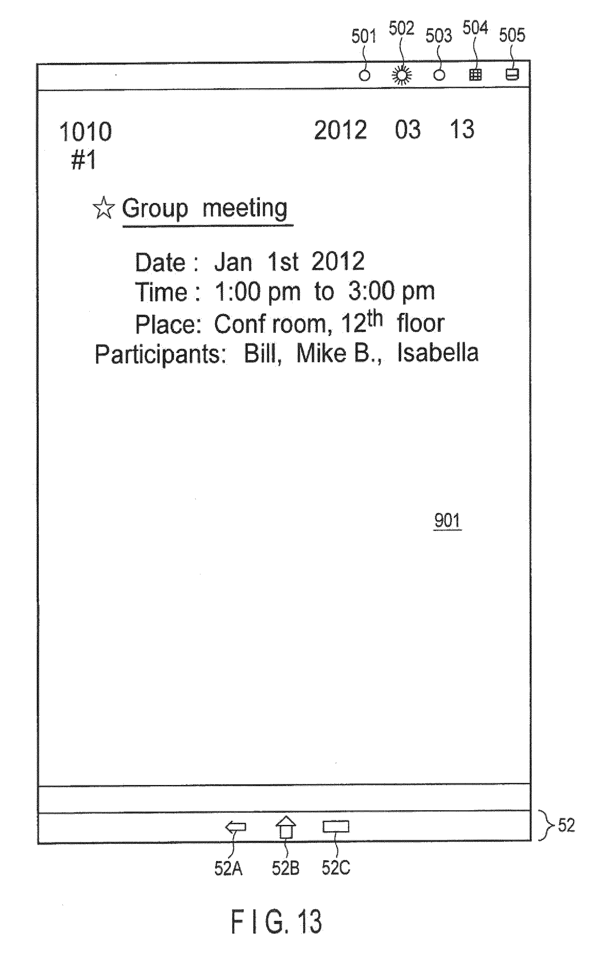

FIG. 13 is an exemplary view showing a screen on which the handwritten page on the page editing screen shown in FIG. 9 is rendered and displayed by operating the document button 84B.

As described above, the document button 84B is a button used to activate processing of recognizing the handwritten page displayed on the page editing screen and converting it into an electronic document file. When and the document button 84B is operated, the handwritten note application program 202 executes handwriting recognition processing of converting a handwritten character string in the handwritten page into a text (character code string). The recognition target of the handwriting recognition processing includes graphics and tables as well characters. As a result, each character formed from strokes in the handwritten page on the page editing screen shown in FIG. 9 is rendered and displayed using the font of the character code corresponding to the character (as a recognition result), as shown in FIG. 13. Note that when an image is imported into the handwritten page, and the includes a character string, the handwritten note application program 202 can execute character recognition processing (OCR) of converting the character string into a text (character code string).

In the tablet computer 10 according to this embodiment, at the time of the handwriting input operation using the pen 100 on the page editing screen, the type of the pen to be used can be switched by, for example, operating the quick select menu, as described above. Hence, for example, a character of a plurality of strokes can be written using lines in a plurality of different colors and widths. When rendering and displaying this character, that is, when displaying the font of a character code obtained by recognizing this character, if the color and width of the font are decided based on, for example, those of the line of the first stroke, the character after rendering may look largely different from that before rendering.

In the tablet computer 10 according to this embodiment, the handwritten note application program 202 includes a function of rendering and displaying a handwritten page so as not to give the user a sense of incongruity.

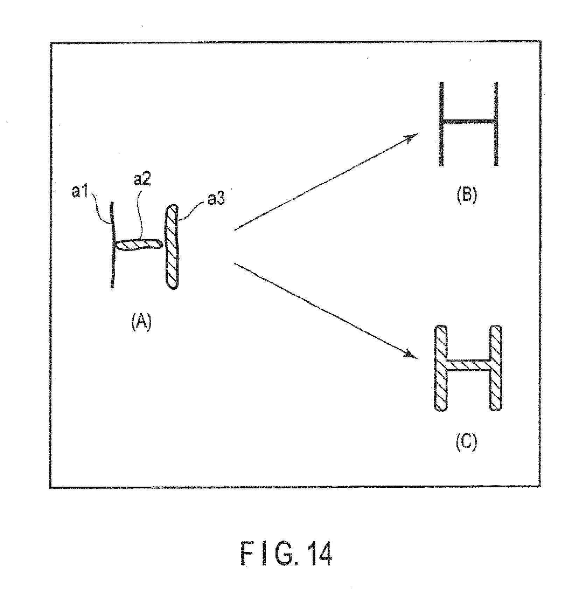

FIG. 14 is an exemplary view for explaining an example of rendering of the handwritten page on the page editing screen by the handwritten note application program 202.

Assume that a character "H" is input by handwriting in the order of a stroke a1, a stroke a2, and a stroke a3 ((A) of FIG. 14). Assume that the first stroke a1 is input by handwriting using a thin black line, and the second and subsequent strokes a2 and a3 are input by handwriting using lines in a color and width different from those of stroke a1. In this case, the color and width of the lines of the latter strokes a2 and a3 are considered to be more dominant than those of the line of the former stroke a1.

In such a case, if the color and width of the font used to display the character "H" are decided based on the color and width of the line of the first stroke a1, the resultant character looks largely different from that actually written by the user ((B) of FIG. 14). On the other hand, in the tablet computer 10 according to this embodiment, the handwritten note application program 202 decides the color and width of the font used to display the character "H" based on, for example, those of the lines of the dominant strokes a2 and a3 ((C) of FIG. 14). More specifically, the handwritten note application program 202 calculates the total length of the strokes of a character, graphics, or table for each color and each width, and uses the color and width of the strokes having the largest calculated total length. This makes it possible to render and display a character, graphics, or table input by handwriting in a form closer to the appearance to the user.

Note that the method using the color and width of the strokes having a largest total length is merely an example. Various other methods are also applicable. For example, the number of strokes of a character, graphics, or table may be counted for each color and each width, and the color and width of the strokes in the largest number may be used. In this case, the color and width of the strokes in the largest number are considered as the dominant color and width in the character, graphics, or table. In the same sense, for example, the total area of the strokes may be calculated for each color and each width, and the color and width of the strokes having largest calculated total area may be used.

Without doing the calculation for each color and each width, for example, the color and width of the longest one of the strokes of a character, graphics, or table may be considered as the dominant color and width in the character, graphics, or table and used. Similarly, without doing the calculation for each color and each width, for example, the color and width of the stroke finally input by handwriting out of the strokes of a character, graphics, or table may be considered as the color and width intended by the user and used.

Especially as for the width, the width to be used for display after rendering may be calculated by, for example, calculating the total length of the strokes of a character, graphics, or table for each width and calculating a weighted average using the calculated total length as a weight. As for the width of the character, only two kinds of fonts, a normal font and a bold font, exist in general. Hence, which one of the fonts should be used is decided depending on whether the calculated width is greater than or equal to a threshold.

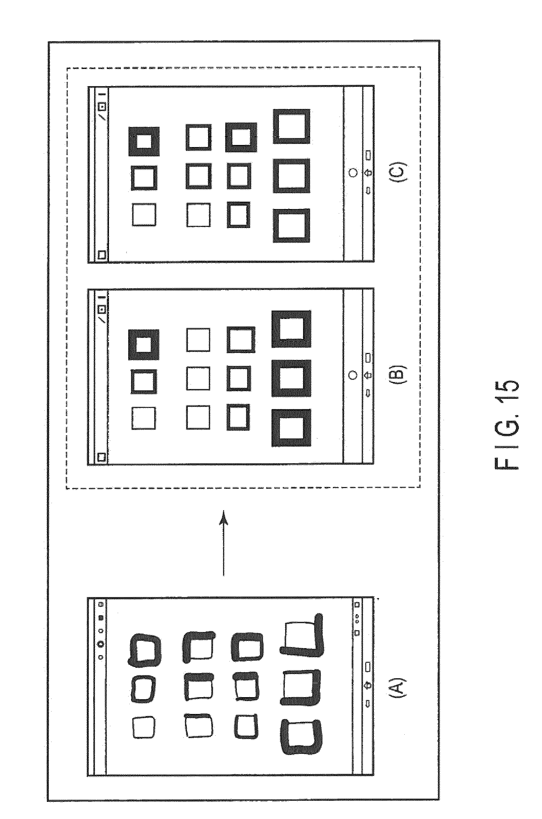

FIG. 15 is an exemplary view showing an example of rendering of the handwritten page on the page editing screen by the handwritten note application program 202. FIG. 15 shows a case in which the rendering is done using the width of strokes having a largest total length and a case in which the rendering is done using the width calculated by a weighted average using the total length of strokes as a weight.

Referring to FIG. 15, (A) shows an example of the handwritten page on the page editing screen, (B) shows an example in which the handwritten page is rendered and displayed using the width of strokes having the largest total length, and (C) shows an example in which the handwritten page is rendered and displayed using the width calculated by a weighted average using the total length of strokes as a weight.

When performing the rendering using the width of strokes having a largest total length, even if there exist a plurality of types of widths of strokes that have small total lengths (no largest total length) and account for the most part of the total length of all strokes, all of strokes are neglected. On the other hand, performing the rendering using the width calculated by a weighted average using the total length of strokes as a weight, if there exists at least one type of width of strokes that have a small total length (no largest total length), the strokes are not neglected and affect the finally calculated width value.

In this way, the tablet computer 10 according to this embodiment implements rendering and displaying the handwritten page so as not to give the user a sense of incongruity.

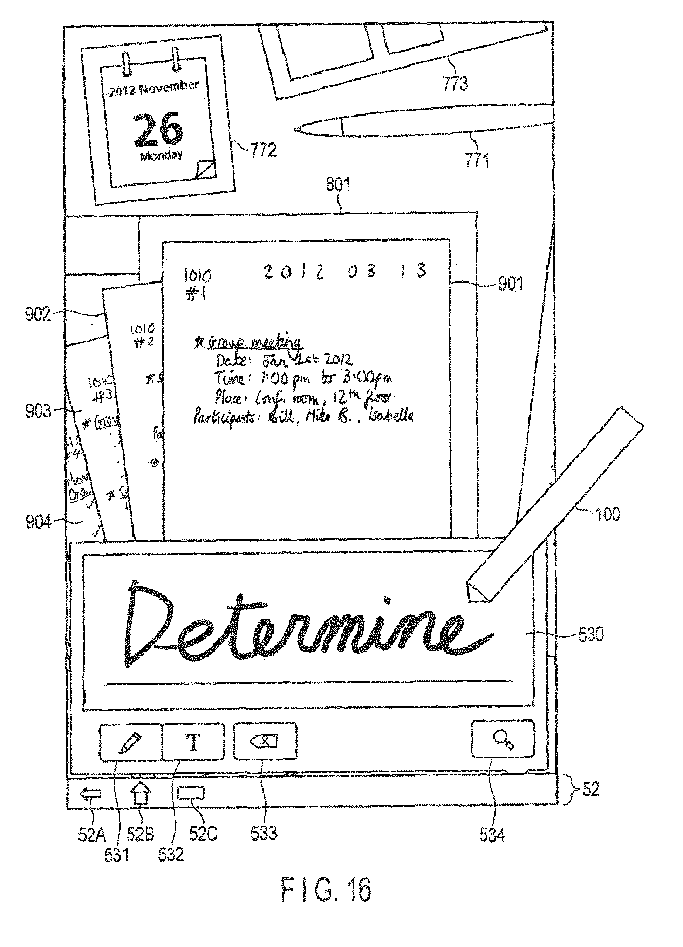

FIG. 16 shows an example of a search screen (search dialogue). FIG. 16 assumes a case in which the search screen (search dialogue) is opened on the note preview screen.

The search screen displays a search key input region 530, a handwriting search button 531, a text search button 532, a delete button 533, and a search execution button 534. The handwriting search button 531 is a button used to select a handwriting search. The text search button 532 is a button used to select a text search. The search execution button 534 is a button used to request execution of search processing.

In the handwriting search, the search key input region 530 is used as an input region to scribble a character string, graphics, table, or the like to be used as a search key. FIG. 16 exemplifies a case in which a handwritten character string "Determine" is input to the search key input region 530 as a search key. The user can scribble not only a character string but also a graphics, table, or the like in the search key input region 530 using the pen 100. When the user selects the search execution button 534 in a state in which the handwritten character string "Determine" is input to the search key input region 530 as a search key, a handwriting search is executed, using the stroke group (query stroke group) of the handwritten character, string "Determine", to search for a handwritten note including a stroke group corresponding to the query stroke group. In the handwriting search, a stroke group similar to the query stroke group is searched for by matching between the strokes. Dynamic programming (DP) matching may be used when calculating the similarity between the query stroke group and another stroke group.

In a text search, for example, a software keyboard is displayed on the screen. The user can input an arbitrary text (character string) to the search key input region 530 as a search key by operating the software keyboard. When the user selects the search execution button 534 in a state in which a text is input to the search key input region 530 as a search key, a text search is executed to search for a handwritten note including a stroke data group corresponding to the text (query text).

The handwriting search/text search can be executed for all handwritten notes or only selected handwritten notes. When the handwriting search/text search is executed, a search result screen is displayed. The search result screen displays a list of handwritten each including a stroke group corresponding to the query stroke group (or query text). A hit word (stroke group corresponding to the query stroke group or query text) is highlighted.

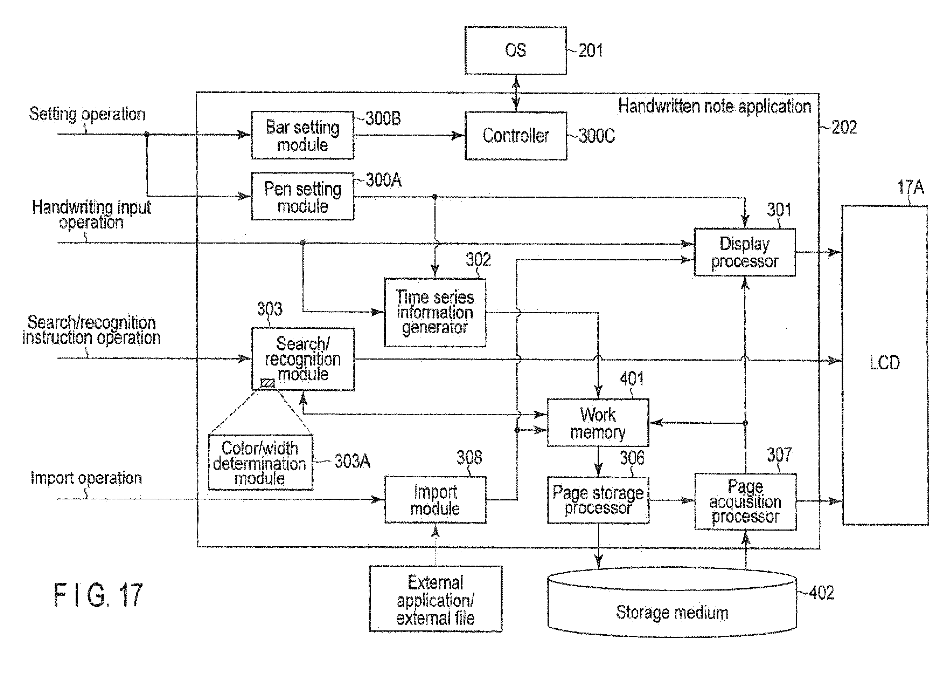

The functional arrangement of the handwritten note application program 202 will be described next with reference to FIG. 17.

The handwritten note application program 202 is a WYSIWYG application capable of handling handwritten document data. The handwritten note application program 202 includes, for example, a pen setting module 300A, a bar setting module 300B, a controller 300C, a display processor 301, a sequential data generator 302, a search/recognition module 303, a page storage processor 306, a page acquisition processor 307, and an import module 308.

The above-described touchpanel 17B is configured to detect occurrence of events such as "touch (contact)", "move (slide)", and "release". "Touch (contact)" is an event indicating that an object (finger) has come into contact with the screen. "Move (slide)" is an event indicating that the contact position has moved during the time in which the object (finger) is in contact with the screen. "Release" is an event indicating that the object (finger) has been released from the screen.

The above-described digitizer 17C is also configured to detect the occurrence of events such as "touch (contact)", "move (slide)", and "release". "Touch (contact)" is an event indicating that an object (pen 100) has come into contact with the screen. "Move (slide)" is an event indicating that the contact position has moved during the time in which the object (pen 100) is in contact with the screen. "'Release" is an event indicating that the object (pen 100) has been released from the screen.

The handwritten note application program 202 displays the page editing screen used to create, browse, and edit handwritten page data on the touchscreen display 17. The pen setting module 300A displays the above-described three types of pens (buttons) in the quick select menu on the page editing screen or the pen setting screen, and sets a stroke rendering form in accordance with a user operation on the buttons and the screen.

The bar setting module 300B displays the user interface (for example, a screen to set the display positions of the above-described back button 52A, home button 52B, and recent application button 52C), and sets the display position the software button group of the OS 201 in accordance with an operation on the user interface performed by the user. The controller 300C communicates with the OS 201.

The display processor 301 and the sequential data generator 302 receive the event "touch (contact)", "move (slide)", or "release" generated by the digitizer 17C, and thus detect the handwriting input operation. The "touch (contact)" event includes the coordinates of the contact position. The "move (slide)" event includes the coordinates of the contact position of the moving destination. Hence, the display processor 301 and the sequential data generator 302 can receive a coordinate-pair series corresponding to the locus of the motion of the contact position from the digitizer 17C.

The display processor 301 displays a handwritten stroke on the screen in accordance with the motion of the object (pen 100) detected using the digitizer 17C. The display processor 301 displays, on the page editing screen, the locus of the pen 100, that is, the locus of each stroke during the time in which the pen 100 is in contact with the screen. The display processor 301 can display, on the page editing screen, various types of content data (image data, audio data, text data, and data created by a drawing application) imported from an external application/external file by the import module 308.

The sequential data generator 302 receives the above-described coordinate-pair series output from the digitizer 17C, and generates handwritten data including sequential data (coordinate-pair data series) having the structure described in detail with reference to FIG. 4 based on the coordinate-pair series. In addition, information associated with the color and thickness (width) of a line set by the pen setting module 300A is included in the handwritten data as attribute information. The sequential data generator 302 temporarily stores the generated handwritten data in a work memory 401.

The search/recognition module 303 executes the above-described handwriting recognition processing of converting a handwritten character string in a handwritten page into a text (character code string) or character recognition processing (OCR) of converting a character string included in an image in a handwritten page into a text (character code string). The search/recognition module 303 includes a color/width determination module 303A. The color/width determination module 303A executes the above-described determination processing of calculating, for example, the total length of strokes of a character, graphics, or table for each color and each width, and deciding the color and width of the strokes having a largest calculated total length as the color and width to be used to render and display the character, graphics, or table. The search/recognition module 303 can also execute the above-described handwriting search and text search.

The page storage processor 306 stores, in a storage medium 402, handwritten page data including a plurality of stroke data items corresponding to a plurality of handwritten strokes on a handwritten page that is being created. The storage medium 402 can be, for example, the storage device in the tablet computer 10 or the storage device 2A of the server 2.

The acquisition processor 307 acquires arbitrary handwritten page data from the storage medium 402. The acquired handwritten page data is sent to the display processor 301. The display processor 301 displays a plurality of strokes corresponding to a plurality of stroke data items included in the handwritten page data on the screen.

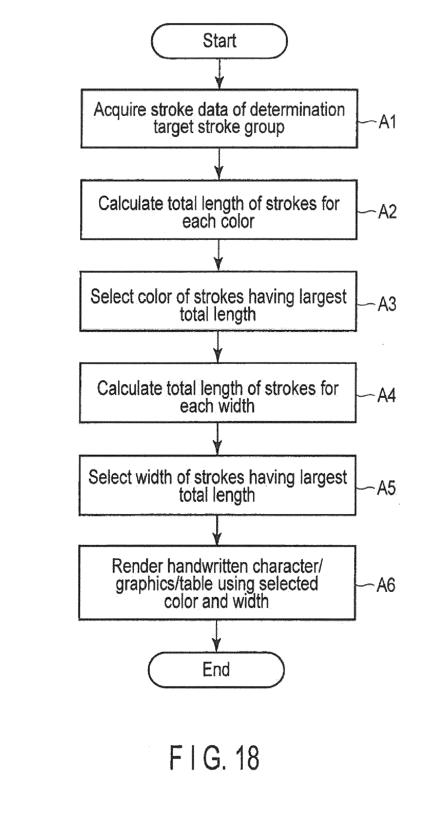

FIG. 18 is an exemplary flowchart showing the procedure of color/width determination processing at the time of handwritten page rendering executed by the handwritten note application program 202.

Assume a case in which when rendering and displaying a character, graphics, or table formed from strokes input by handwriting, a method using a color and width of strokes of the character, graphics, or table, which have a largest total length, is applied.

As described above, the search/recognition module 303 of the handwritten note application program 202 executes handwriting recognition processing of converting a handwritten character string in a handwritten page into a text (character code string). At this time, the color/width determination module 303A acquires the stroke data of a determination target stroke group using the character, graphics, or table to be recognized by the search/recognition module 303 as a unit of the color/width determination processing (block A1).

First, the color/width determination module 303A calculates the total length of the strokes of the (determination target) character, graphics, or table for each color (block A2), and selects the color of strokes having a largest calculated total length (block A3).

Second, the color/width determination module 303A calculates the total length of the strokes of the (determination target) character, graphics, or table for each width (block A4), and selects the width of strokes having a largest calculated total length (block A5).

The handwritten note application program 202 executes handwritten page rendering using the color and width selected by the color/width determination module 303A (block A6).

As described above, the tablet computer 10 according to this embodiment implements rendering and displaying a character, graphics, or table input by handwriting in a form closer to the appearance to the user so as not to give the user a sense of incongruity.

Note that various kinds of processing according to this embodiment can be implemented by a computer program. When the computer program is only installed in a normal computer via a computer readable storage medium storing the computer program and executed, the effects as in this embodiment can easily be implemented.

## Claims

1. An electronic device (10) **characterized by** comprising:
a receiver (202) configured to receive stroke data corresponding to a plurality of strokes; and
a display controller (202) configured to display the plurality of strokes corresponding to a single object, the single object comprising a character, a graphics or a table,
the device **characterized in that**:
the plurality of strokes comprise at least one first stroke with a first color and at least one second stroke with a second color different from the first color, or comprise at least one first stroke with a first width and at least one second stroke with a second width different from the first width; and
the display controller configured to display, instead sense of the plurality of strokes, the single object using the first color or the second color determined by using a display area of at least one first stroke and a displayed area of the at least one second stroke, or the display controller is configured to display, instead of the plurality of strokes, the single object using the first width or the second width determined by using a display area of the at least one first stroke and a display area of the at least one second stroke.

2. The device of Claim 1, **characterized in that** the display controller (202) is configured to display single object using the color or width corresponding to one or more strokes having a largest total length.

3. The device of Claim 1, **characterized in that** the display controller (202) is configured to display the single object using the color or width corresponding to one or more strokes having a largest number of strokes.

4. The device of Claim 1, **characterized in that** the display controller (202) is configured to display the single object using the color or width corresponding to one or more strokes having a largest area.

5. The device of Claim 1, **characterized in that** the display controller (202) is configured to display the single object using the color or width corresponding to a longest stroke in the plurality of strokes.

6. The device of Claim 1, **characterized in that** the display controller (202) is configured to display the single object using the color or width corresponding to a finally handwritten stroke in the plurality of strokes.

7. The device of Claim 1, **characterized in that** the display controller (202) is configured to calculate the width by a weighted average using a total length of strokes having a same width for each width as a weight.

8. A method of an electronic device, the method **characterized by** comprising:
receiving (A1) stroke data corresponding to a plurality of strokes; and
displaying (A2-A6) the plurality of strokes corresponding to a single object, the single object comprising a character, a graphics or a table,
the method **characterized in that**:
the plurality of strokes comprise at least one first stroke with a first color and at least one second stroke with a second color different from the first color, or comprise at least one first stroke with a first width and at least one second stroke with a second width different from the first width; and
the displaying comprises displaying instead of the plurality of strokes, the single object using the first color or the second color determined by using a display area of the at least one first stroke and a displayed area of the at least one second stroke, or the displaying comprises displaying, instead of the plurality of strokes, the single object using the first width or the second width determined by using a display area of the at least one first stroke and a display area of the at least one second stroke.

9. The method of Claim 8, **characterized in that** the displaying (A2-A6) comprises displaying the single object using the color or width corresponding to one or more strokes having a largest total length.

10. The method of Claim 8, **characterized in that** the displaying comprises displaying the single object using the color or width corresponding to one or more strokes having a largest number of strokes.

11. The method of Claim 8, **characterized in that** the displaying (A2-A6) comprises displaying the single object using the color or width corresponding to one or more strokes having a largest area.

12. The method of Claim 8, **characterized in that** the displaying (A2-A6) comprises displaying the single object using the color or width corresponding to a longest stroke in the plurality of strokes.

13. The method of Claim 8, **characterized in that** the displaying (A2-A6) comprises displaying the single object using the color or width corresponding to a finally handwritten stroke in the plurality of strokes.

14. The method of Claim 8, **characterized in that** the displaying (A2-A6) comprises calculating the width by a weighted average using a total length of strokes having a same width for each width as a weight,

15. A computer-readable, non-transitory storage medium having stored thereon a computer program which is executable by a computer, the computer program controlling the computer to function as:
a receiver (202) configured to receive stroke data corresponding to a plurality of strokes; and
a display controller configured to display the plurality of strokes corresponding to a single object, the single object comprising a character, a graphics or a table,
the medium **characterized in that**:
the plurality of strokes comprise at least one first stroke with a first color and at least one second stroke with a second color different from the first color, or comprise at least one first stroke with a first width and at least one second stroke with a second width different from the first width; and
the display controller is configured to display, instead of the plurality of strokes, the single object using the first color or the second color determined, by using a display area of the at least one first stroke and a displayed area of the at least one second stroke, or the display controller is configured to display, instead of the plurality of strokes, the single object using the first width or the second width determined by using a display area of the at least one first stroke and a display area of the at least one second stroke.

16. The medium of Claim 15, **characterized in that** the display controller (202) is configured to display the single object using the color or width corresponding to one or more strokes having a largest total length.

17. The medium of Claim 15, **characterized in that** the display controller (202) is configured to display the single object using the color or width corresponding to one or more strokes having a largest number of strokes.

18. The medium of Claim 15, **characterized in that** the display controller (202) is configured to display the single object using the color or width corresponding to one or more strokes having a largest area.

19. The medium of Claim 15, **characterized in that** the display controller (202) is configured to display the single object using the color or width corresponding to a longest stroke in the plurality of strokes.

20. The medium of Claim 15, **characterized in that** the display controller (202) is configured to display the single object using the color or width corresponding to a finally handwritten stroke in the plurality of strokes.

21. The medium of Claim 15, **characterized in that** the display controller (202) is configured to calculate the width by a weighted average using a total length of the strokes for each width as a weight.
